# EUROPÄISCHE PATENTSCHRIFT

(11) **EP 3 108 224 B1**
(45) Veröffentlichungstag und Bekanntmachung des Hinweises auf die Patenterteilung: **21.03.2018**
(21) Anmeldenummer: 14705779.8
(22) Anmeldetag: 21.02.2014
(51) Int. Cl.: G01N 27/30, G01N 27/403

(54) **REFERENZELEKTRODENEINSATZ FÜR EINE ELEKTROCHEMISCHE TESTZELLE**
REFERENCE ELECTRODE INSERT FOR AN ELECTROCHEMICAL TEST CELL
INSERT À ÉLECTRODE DE RÉFÉRENCE D'UN ÉLÉMENT ÉLECTROCHIMIQUES D'ESSAI

(43) Veröffentlichungstag der Anmeldung: 28.12.2016
(73) Patentinhaber: El-Cell GmbH, 21079 Hamburg (DE)
(72) Erfinder: HAHN, Michael, 22589 Hamburg (DE); HAHN, Matthias, 30890 Barsinghausen / Kirchdorf (DE)
(74) Vertreter: Müller Verweyen
(86) Internationale Anmeldenummer: PCT/EP2014/053409
(87) Internationale Veröffentlichungsnummer: WO 2015/124198

(56) Entgegenhaltungen:
- GB-A- 2 095 409
- US-A- 3 325 378
- US-A- 4 314 896
- "ECC-Stand Docking station for test cells ECC-Std, ECC-Ref, ECC-RingRef and ECC-Aqu User Manual", , 5. Februar 2014 (2014-02-05), XP055141418, Gefunden im Internet: URL:http://el-cell.com/wp-content/uploads/ manuals/ECC_STAND_manual.pdf [gefunden am 2014-09-19]
- "Electrochemical Test Cell ECC-Ref User Manual", , 22. Januar 2014 (2014-01-22), XP055141417, Gefunden im Internet: URL:http://el-cell.com/wp-content/uploads/ manuals/ECC_REF_manual.pdf [gefunden am 2014-09-19]
- "Products 2014", , 1. September 2014 (2014-09-01), XP055143006, Gefunden im Internet: URL:http://el-cell.com/wp-content/uploads/ EL-CELL_ProductFlyer_September2014.pdf [gefunden am 2014-09-26]

## Beschreibung

Die Erfindung betrifft einen Referenzelektrodeneinsatz für eine elektrochemische Testzelle, insbesondere zum Testen von Lithium-Ionen-Zellen, umfassend eine Referenzelektrode und eine Hülse zur Halterung der Referenzelektrode.

In der Forschung und Entwicklung von elektrochemischen Speicherzellen, beispielsweise Lithium-Ionen-Akkus, werden elektrochemische Testzellen zur Charakterisierung der Batteriematerialien verwendet. In einer Drei-Elektroden-Testzelle wird eine Elektrodenanordnung mit in wechselseitigem Elektrolytkontakt stehender Arbeitselektrode, Gegenelektrode und Referenzelektrode mit einem definierten Druck beaufschlagt. Über externe Anschlüsse, die mit den Elektroden leitend verbunden sind, werden elektrische Kennlinien zur Charakterisierung der verwendeten Batteriematerialien aufgenommen, beispielsweise Strom-/Spannungskennlinien, Konstantstrom-Zyklen und Impedanzspektren.

Eine herkömmliche, unter dem Namen ECC-Ref bekannte elektrochemische Testzelle des Anmelders umfasst eine Elektrodenanordnung mit einer Arbeitselektrode, einer Gegenelektrode und einer elektrolytgetränkten Separatorschicht, eine Hülse zum Halten der Elektrodenanordnung, einen von einer Seite in die Hülse einschiebbaren Stahlzylinder als ersten Stromsammler und eine die Hülse umgebende topfförmige Basis aus Edelstahl als zweiten Stromsammler. In der Hülse ist eine Durchführungsbohrung vorgesehen, in die vom Anwender meist unter Zuhilfenahme eines speziellen Werkzeugs zunächst das Referenzmaterial, beispielsweise metallisches Lithium, eingepresst wird. Dabei soll das Referenzmaterial möglichst genau bis zur Innenseite der Hülse reichen. Anschließend wird die mit Referenzmaterial präparierte Hülse von oben in die topfförmige Basis aus Edelstahl eingeführt und eine Vielzahl von weiteren Schritten durchgeführt. Die Präparation der Hülse mit dem Referenzmaterial ist zeitaufwändig und in erheblichem Maße vom Geschick des Anwenders abhängig.

Eine herkömmliche Testzellenstation des Anmelders zur Aufnahme von bis zu fünf Testzellen ist unter dem Namen ECC-Stand bekannt. Die Testzellenstation ist über zwei Kabel mit einer Anschlussbox (Terminal Box) verbunden, die Anschlussbuchsen zum Anschluss an eine elektronische Steuer- und Signalverarbeitungseinrichtung (Batterietester bzw. Mehrkanalpotentiostat) aufweist. In der Terminal Box kann optional ein interner USB Datenlogger vorgesehen sein.

Die Aufgabe der Erfindung besteht darin, den Aufwand für den Aufbau einer elektrochemischen Referenz-Testzelle für den Anwender zu verringern und die Reproduzierbarkeit von Batterietestergebnissen zu verbessern.

Die Erfindung löst die Aufgabe mit den Merkmalen der unabhängigen Ansprüche. Demnach bilden die Hülse und die Referenzelektrode eine bauliche Einheit, wobei die Referenzelektrode fest und unverlierbar in der Hülse eingekapselt gehalten ist. Das Referenzmaterial kann somit bereits herstellerseitig in die Hülse verbaut und die bauliche Einheit aus Hülse und Referenzelektrode kann als ein Einwegteil an den Anwender geliefert werden. Die Qualität der Referenzelektrode hängt erfindungsgemäß nicht mehr vom Geschick des Anwenders ab, sondern kann herstellerseitig präzise und reproduzierbar sichergestellt werden. Aufgrund der erfindungsgemäßen Kapselung der Referenzelektrode in der Hülse ist ein Herausfallen oder eine versehentliche Fehlbehandlung des Referenzmaterials durch den Anwender ausgeschlossen.

Aufgrund der erfindungsgemäßen ringförmigen Referenzelektrode werden Langzeittestmessungen beispielsweise über 1000 Stunden verlässlich möglich. Bei der aus dem Stand der Technik bekannten punktförmigen Anbindung der Referenzelektrode an die Arbeits-/Gegenelektrode konnte durch Gasblasenbildung unter ungünstigen Umständen nach einer gewissen Zeit der Referenzkontakt unterbrochen werden, so dass verlässliche Messungen nur für einen deutlich kürzeren Zeitraum möglich waren.

Vorzugsweise umfasst die Hülse ein erstes Hülsenteil, ein zweites Hülsenteil und zwischen den Hülsenteilen wirkende Verbindungsmittel, mittels derer die Hülsenteile unverlierbar miteinander verbindbar sind. Dies ermöglicht eine einfache und schnelle Herstellung des erfindungsgemäßen Referenzelektrodeneinsatzes durch den Hersteller. Besonders bevorzugt sind Schnapp- oder Clipsverbindungsmittel, aber auch eine Schraub- oder Klebeverbindung ist nicht ausgeschlossen.

Die Hülse besteht vorteilhaft aus einem batterietauglichen (battery grade) Material, insbesondere einem thermoplastischen batterietauglichen Kunststoff, beispielsweise Polypropylen PP oder High Density-Polyethylen HDPE mit einer Dichte zwischen 0,94 und 0,97 g/cm³. Dies ist vorteilhaft gegenüber üblichen Testzellen aus Komponenten, die meist zerspanend hergestellt werden, was mit batterietauglichen Materialien nicht oder nur schwierig realisierbar ist. Ein batterietauglicher Kunststoff, insbesondere PP oder HDPE, lässt sich dagegen mit Spritzguss einfach verarbeiten. Batterietaugliche Materialien sind generell solche, die auch in kommerziellen Batterien eingesetzt werden.

Vorzugsweise umfasst die Referenzelektrode einen insbesondere metallischen Trägerring, in dem mindestens eine Ausnehmung zur Aufnahme des Referenzmaterials vorgesehen ist. Vorzugsweise weist der Trägerring eine Mehrzahl von über seinen Umfang verteilte Ausnehmungen zur Aufnahme des Referenzmaterials auf. Die Ausnehmung kann jedoch beispielsweise auch eine ringförmige Nut sein.

Vorzugsweise umfasst die Referenzelektrodenanordnung einen insbesondere metallischen Kontaktring, der in elektrischem Kontakt mit dem Trägerring steht. Der Kontaktring dient einerseits zur Herstellung des elektrischen Kontakts des Referenzmaterials mit einem externen elektrischen Referenzanschluss der Testzelle und kann angepasst an diese Funktion gestaltet sein. Beispielsweise kann der Kontaktring dünner sein als der Trägerring. Der Kontaktring kann vorteilhaft eine abgewinkelte Lasche als Federkontaktzunge zur elektrischen Verbindung mit einem externen elektrischen Anschluss aufweisen. Zum anderen verringert der Kontaktring vorteilhaft die Impedanz der Referenzelektrode (Shunt-Wirkung bei hohen Messfrequenzen).

In einer bevorzugten Ausführungsform wird die Membran von einem elektrolytgetränkten Separator gebildet, der zwischen der Arbeitselektrode und der Gegenelektrode angeordnet ist und vorteilhaft aus einer Kunststoff-Folie, insbesondere einer Polyolefin-Folie, oder einem Faservlies, insbesondere einem Glasfaservlies, besteht. Der Separator verhindert einen elektrischen Kurzschluss zwischen Arbeits- und Gegenelektrode und dient in dieser Ausführungsform ebenfalls als "Docht" zur Referenzelektrode, wodurch der notwendige Elektrolytkontakt zwischen allen drei Elektroden gewährleistet wird. Der Separator wird in dieser Ausführungsform vorteilhaft vom Hersteller montiert und ist Teil des fest und unverlierbar in der Hülse gehaltenen Referenzelektrodeneinsatzes. Vorzugsweise ist der Separator mit Hilfe des Trägerrings auf die Hülse aufgespannt.

In einer alternativen Ausführungsform kann die Membran ringförmig sein. Die herstellerseitig eingebaute, ringförmige Membran übernimmt dann nur die Funktion des "Dochts", um den Elektrolytkontakt zu dem Referenzmaterial herzustellen. Der Anwender kann dann einen beliebigen Separator einsetzen. Dies kann beispielsweise vorteilhaft sein, wenn der Anwender einen dickeren Separator beispielsweise aus Glasfaser verwenden möchte.

Eine elektrochemische Testzelle nach der Erfindung umfasst einen ersten Stromsammler, einen zweiten Stromsammler und eine zwischen dem ersten und dem zweiten Stromsammler angeordnete Elektrodenanordnung mit einer Arbeitselektrode, einer Gegenelektrode und einem zuvor beschriebenen Referenzelektrodeneinsatz. Die Stromsammler bestehen vorteilhaft aus einem batteriegeeigneten Metall, insbesondere Edelstahl (beispielweise 1.4404), Kupfer (beispielsweise E-Cu58, W.Nr. 2.0060) oder Aluminium (beispielsweise AL 99.85 bzw. EN AW-1085). Die Stromsammler können jeweils als Mehrwegteil (insbesondere im Fall von Edelstahl) oder Einwegteil (insbesondere im Fall von Cu, Al) ausgeführt sein. Das Gehäuse der Testzelle umgibt die Innenzelle (Stromsammler und Elektrodenanordnung) und dichtet diese mittels entsprechender Dichtungen hermetisch gegenüber Umgebungseinflüssen ab.

Vorteilhaft kann die Testzelle an einer Kontaktseite mit einer Testzellenstation ein leitendes Kontaktelement zur Anwesenheitsdetektion aufweisen. Die Anwesenheit einer Testzelle in einer Aufnahme der Testzellenstation ist einfach ermittelbar, wenn in der Aufnahme zwei Kontakte vorgesehen sind, die durch das Kontaktelement der Testzelle kurzgeschlossen werden.

Die erfindungsgemäße Testzelle ist vorteilhaft für die Forschung und Entwicklung von elektrochemischen Speicherzellen, insbesondere elektrochemischen Sekundärzellen bzw. Sekundärbatterien, elektrochemischen Primärzellen und elektrochemischen Kondensatoren, beispielsweise Doppelschichtkondensatoren, vorgesehen.

Die Erfindung wird im Folgenden anhand bevorzugter Ausführungsformen unter Bezugnahme auf die beigefügten Figuren erläutert. Dabei zeigt:
- Fig. 1: eine Explosionsansicht einer Innenzelle für eine elektrochemische Testzelle;
- Fig. 2: eine Explosionsansicht eines erfindungsgemäßen Referenzelektrodeneinsatzes;
- Fig. 3: eine Explosionsansicht eines Teils des Referenzelek-trodeneinsatzes gemäß Figur 2;
- Fig. 4: eine Draufsicht auf einen Trägerring für einen Referenzelektrodeneinsatz;
- Fig. 5: eine perspektivische Querschnittsansicht eines Hülsenteils mit aufgespannter Separatorfolie;
- Fig. 6: eine Querschnittsansicht einer elektrochemischen Testzelle;
- Fig. 7: eine Querschnittsansicht einer Innenzelle für eine elektrochemische Testzelle;
- Fig. 8: einen vergrößerten Ausschnitt des gestrichelten Bereichs aus Figur 7;
- Fig. 9: eine perspektivische Ansicht auf eine elektrochemische Testzelle;
- Fig. 10: eine perspektivische Ansicht einer elektrochemischen Testzelle von unten;
- Fig. 11: eine perspektivisch Ansicht einer elektrochemischen Testzelle in einer alternativen Ausführungsform mit Schraubklammer; und
- Fig. 12: eine perspektivische Ansicht einer nicht erfindungsgemäßen Testzellenstation zur Aufnahme einer Mehrzahl von elektrochemischen Testzellen.

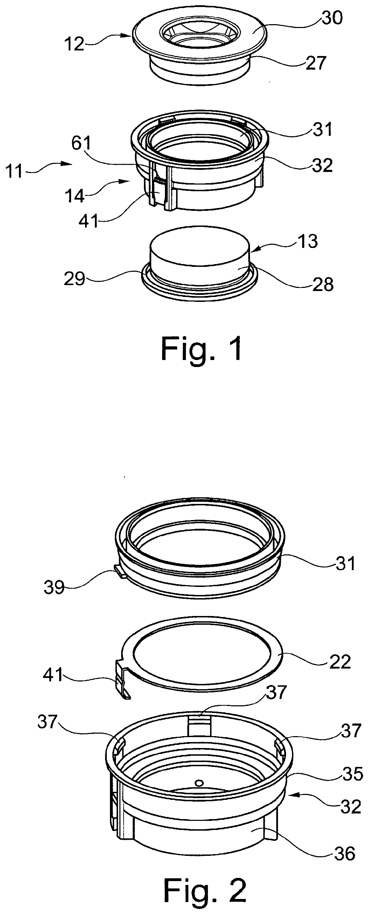

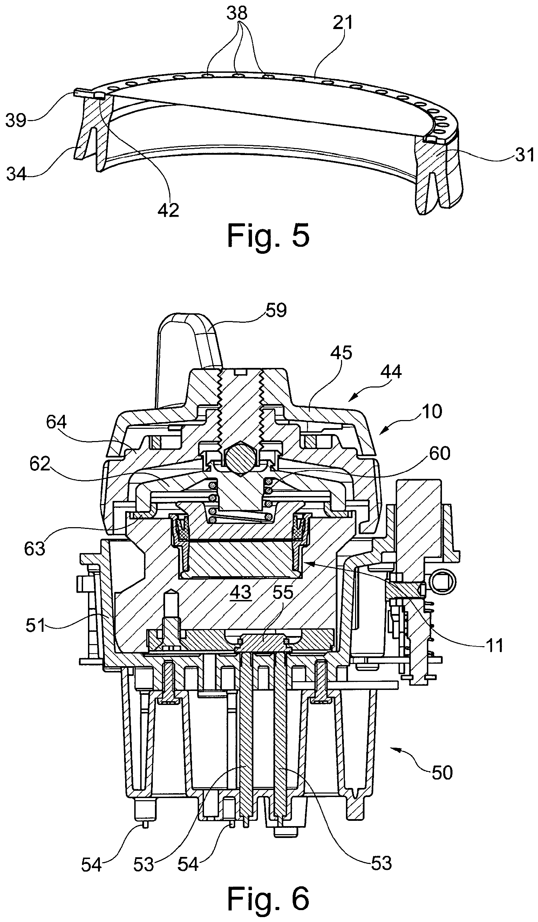

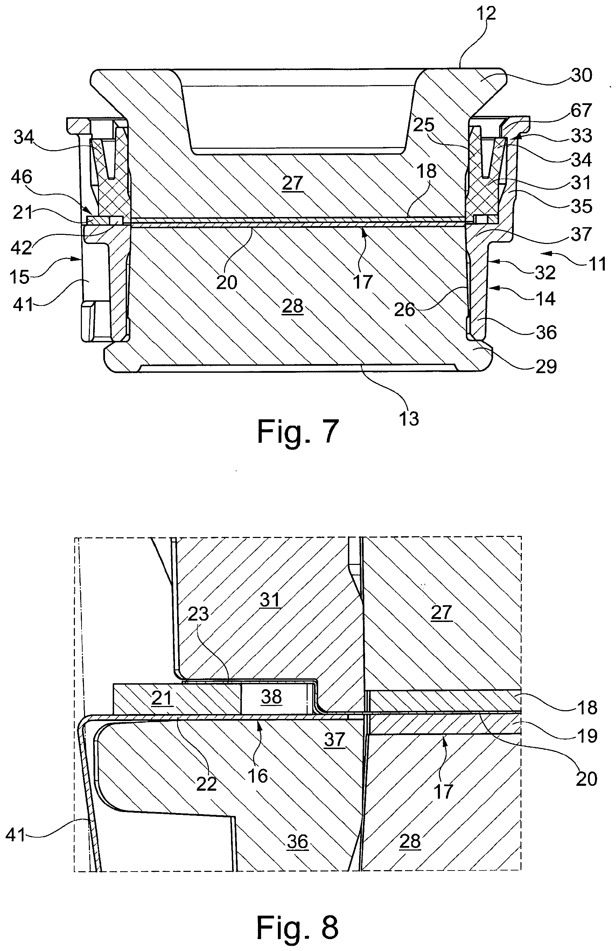

Der innere Aufbau einer elektrochemischen Testzelle 10 (siehe Figuren 6, 9 bis 11), der auch als Innenzelle 11 bezeichnet werden kann, ist aus den Figuren 1, 7 und 8 ersichtlich. Die Innenzelle 11 umfasst einen ersten Stromsammler 12 aus einem batterietauglichen Metall, einen zweiten Stromsammler 13 aus einem batterietauglichen Metall, einen Referenzelektrodeneinsatz 14 und eine Elektrodenanordnung 17 mit einer Arbeitselektrode 18, einer Gegenelektrode 19 und einem die Arbeitselektrode 18 von der Gegenelektrode 19 trennenden, elektrolytgetränkten Separator 20, siehe Figur 8. Der Referenzelektrodeneinsatz 14 umfasst eine insgesamt rohrförmige Hülse 15 und eine Referenzelektrodenanordnung 16, die am besten ebenfalls in Figur 8 erkennbar ist.

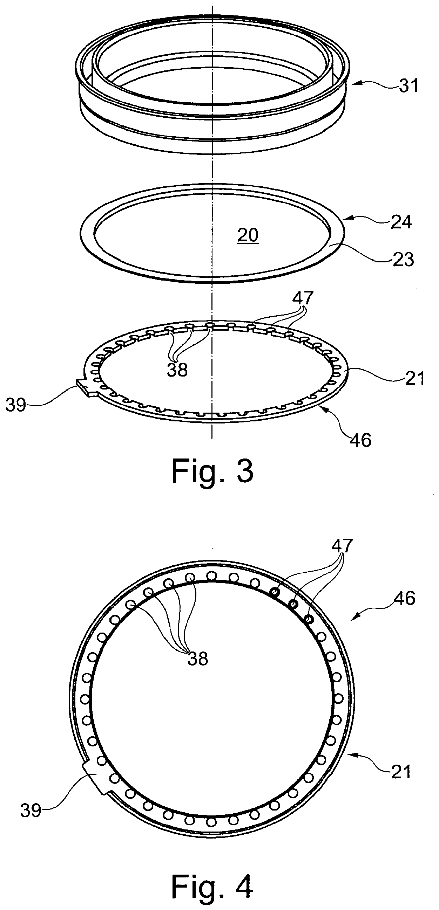

Die Referenzelektrodenanordnung 16 umfasst einen Trägerring 21, einen Kontaktring 22 und eine ringförmige, elektrolytgetränkte Membran 23, die später noch genauer beschrieben wird. In der vorliegenden Ausführungsform werden die ringförmige Membran 23 und der Separator 20 von einem einheitlichen Membranelement 24 gebildet, siehe Figur 3. Das Membranelement 24 kann beispielsweise eine dünne poröse Kunststofffolie, insbesondere eine poröse Polyolefinfolie sein. Andere Ausführungen sind möglich und werden später erläutert.

Der Trägerring 21 dient zum Aufnehmen des Referenzmaterials 47, beispielsweise metallisches Lithium, und weist zu diesem Zweck eine Vielzahl von Taschen 38 auf, die vorzugsweise gleichmäßig über den Umfang des Trägerrings 21 verteilt sind. Die Füllung der Taschen 38 mit dem Referenzmaterial 47 ist in den Figuren 3 und 4 nur beispielhaft für jeweils drei Taschen 38 angedeutet. Die Taschen 38 sind vorzugsweise axialparallele Durchbohrungen durch den Trägerring 21 und können radial nach innen offen sein. Der Trägerring 21 kann ein Positionierungsmittel 39, beispielsweise einen radialen Vorsprung, aufweisen, mittels dessen die Orientierung des Trägerrings relativ zu der Hülse 15 festlegbar sein kann. Der mit dem Referenzmaterial 47 gefüllte Trägerring 21 bildet eine ringförmige Referenzelektrode 46.

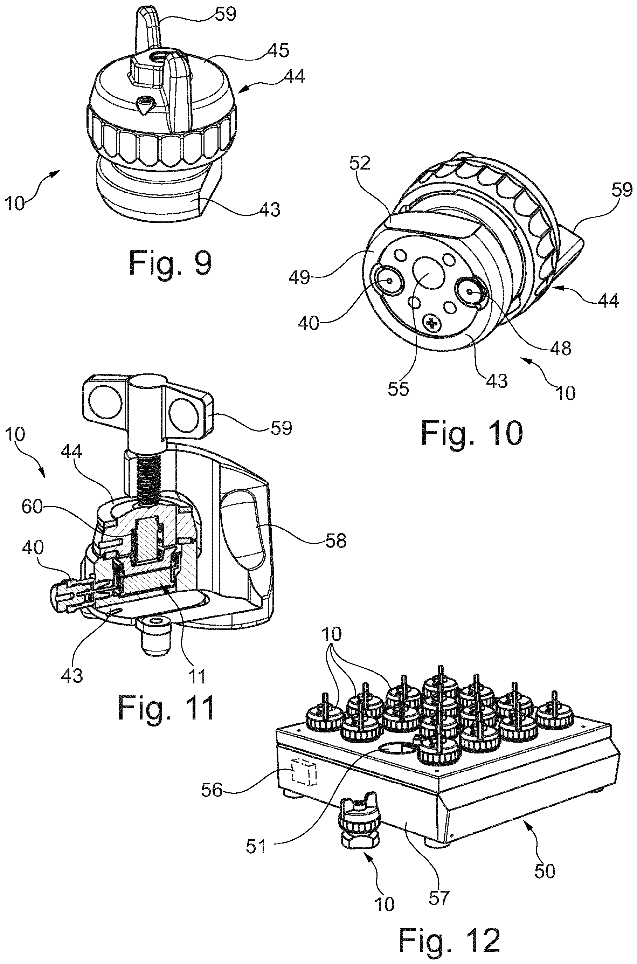

Der metallische Kontaktring 22, der in elektrischem Kontakt mit dem Trägerring 21 steht, hat zwei Funktionen. Der Kontaktring 22 dient einerseits zur Herstellung des elektrischen Kontakts des Referenzmaterials 47 mit einem externen elektrischen Referenzanschluss 40 der Testzelle 10 (siehe Figuren 10 und 11) und kann angepasst an diese Funktion gestaltet sein. Beispielsweise kann der Kontaktring 22 dünner sein als der Trägerring 21. Der Kontaktring 22 kann vorteilhaft eine abgewinkelte Lasche 41 als Federkontaktzunge zur elektrischen Verbindung mit dem externen elektrischen Anschluss 40 aufweisen. Zum anderen verringert der Kontaktring 22 vorteilhaft die Impedanz der Referenzelektrode 46 (Shunt-Wirkung bei hohen Messfrequenzen).

Die Elektrodenanordnung 17 ist im mittleren axialen Bereich in der Hülse 15 angeordnet und etwa senkrecht zu der Mittelachse der Hülse 15 orientiert. Die Elektrodenanordnung 17 teilt somit die rohrförmige Hülse 15 in einen ersten Rohrabschnitt 25 zur Aufnahme des ersten Stromsammlers 12 und einen zweiten Rohrabschnitt 26 zur Aufnahme des zweiten Stromsammlers 13. Die Stromsammler 12, 13 weisen jeweils einen zylindrischen Kolben 27, 28 auf, dessen Außendurchmesser mit dem Innendurchmesser des entsprechenden Rohrabschnitts 25, 26 korrespondiert, so dass die Kolben 27, 28 unter Passung in den entsprechenden Rohrabschnitt 25, 26 einsteckbar sind. Mindestens einer der Stromsammler 13 weist an seinem äußeren Ende einen Kragen 29 auf, der zum passgenauen Anschlag an die Hülse 15 eingerichtet ist. Dies wird später genauer erläutert. Der andere Stromsammler 12 kann ebenfalls an seinem äußeren Ende einen Kragen 30 aufweisen, beispielsweise zur besseren Handhabbarkeit.

Die Hülse 15 besteht vorteilhaft aus einer Mehrzahl von hier zwei Hülsenteilen 31, 32, die mittels eines Verbindungsmittels, hier eines Schnapp- oder Clipsverbindungsmittels 33, unverlierbar und fest miteinander verbindbar sind. Das erste Hülsenteil 31 ist ringförmig (siehe Figur 3) und weist eine umlaufende äußere Federzunge 34 sowie eine ringförmige Ausnehmung 42 zur klemmenden Aufnahme des Trägerrings 21 auf. Das zweite Hülsenteil 32 weist einen ersten Hülsenabschnitt 35 mit größerem Innendurchmesser, einen zweiten Hülsenabschnitt 36 mit kleinerem Innendurchmesser und einen die beiden Hülsenabschnitte 35, 36 verbindenden Sockel 37 auf. Am Innenumfang des ersten Hülsenabschnitts 35 ist eine Mehrzahl von beispielsweise fünf über den Umfang verteilten Rastvorsprüngen 67 vorgesehen. Das erste Hülsenteil 31 ist in den ersten zylindrischen Abschnitt 35 des zweiten Hülsenteils 32 einschiebbar, bis die Federzunge 34 hinter den Rastvorsprüngen 67 einrastet, wodurch das erste Hülsenteil 31 fest und unverlierbar mit dem zweiten Hülsenteil 32 verbunden und in diesem gehalten ist. Das erste Hülsenteil 31 bildet somit den ersten Rohrabschnitt 25, der zweite Hülsenabschnitt 36 des zweiten Hülsenteils 32 den zweiten Rohrabschnitt 26 aus. Das zweite Hülsenteil 32 weist eine Durchgangsöffnung 61 auf (siehe Figur 1), durch die die Lasche 41 des Kontaktrings 22 hindurchgesteckt werden kann, um eine einfache Verbindung des Kontaktrings 22 durch die Hülse 15 mit dem externen Referenzanschluss 40 zu ermöglichen. Die Clipsverbindungsmittel 33 können unlösbar, d.h. nur unter Zerstörung der Hülse 15 miteinander verbindbar sein, um ein Öffnen des Referenzelektrodeneinsatzes 14 durch den Anwender zu verhindern. Es ist aber nicht ausgeschlossen, dass die Clipsverbindungsmittel 33 alternativ lösbar, beispielsweise mittels Werkzeug, miteinander verbindbar sind. Unterschiedliche Ausführungen der Clipsverbindungsmittel 33 sind möglich, beispielsweise kann mehr als eine Federzunge 34 vorgesehen sein und/oder nur ein Rastvorsprung 67. Der oder die Rastvorsprünge 67 können alternativ an dem ersten Hülsenteil 31 und die Federzunge(n) 34 an dem zweiten Hülsenteil 32 vorgesehen sein.

Zur Montage eines erfindungsgemäßen Referenzelektrodeneinsatzes 14 wird zunächst herstellerseitig das Membranelement 24 auf das erste Hülsenteil 31 gelegt und sodann der Trägerring 21 in die Aufnahme 42 des ersten Hülsenteils 31 gedrückt und darin festgeklemmt, wodurch das Membranelement 24 in der Art eines Trommelfells auf das erste Hülsenteil 31 aufgespannt ist. Dieser Zustand ist in Figur 5 gezeigt. Nun wird herstellerseitig eine geringe Menge des Referenzmaterials, hier metallisches Lithium, in die Taschen 38 des Trägerrings 21 eingepresst.

Alternativ kann der Trägerring 21 flächig mit dem Referenzmaterial 47 beschichtet werden, beispielsweise per Siebdruck, galvanischer Beschichtung, Aufdampfen, Sputtern, Chemical Vapor Deposition CVD etc. Die Taschen 38 in dem Trägerring 21 sind in dieser Ausführung vorteilhaft entbehrlich.

Anschließend wird der Kontaktring 22 in den ersten Hülsenabschnitt 35 des zweiten Hülsenteils 32 eingelegt, wobei die Lasche 41 des Kontaktrings 22 durch die Durchgangsöffnung 61 gesteckt wird. Das erste Hülsenteil 31 wird sodann in den ersten Hülsenabschnitt 35 des zweiten Hülsenteils 32 eingeschoben, bis die Schnappverbindungsmittel 34, 67 einrasten. In diesem Zustand ist das Referenzmaterial 47 in der Hülse 15 unverlierbar eingekapselt, siehe insbesondere Figur 8. Die Abmessungen sind dabei so gewählt, dass das erste Hülsenteil 31 die Referenzelektrodenanordnung 16, d.h. die Membran 23 bzw. das Membranelement 24, den Trägerring 21 und den Kontaktring 22, gegen das zweite Hülsenteil 32 drückt und die Referenzelektrodenanordnung 16 somit fest in der Hülse 15 sitzt. Der auf diese Weise herstellerseitig gebildete Referenzelektrodeneinsatz 14 ist in der Mitte der Figur 1 gezeigt. Der Referenzelektrodeneinsatz 14 wird herstellerseitig unter Schutzgas verpackt und kann in dieser Form an den Anwender geliefert werden.

Im Folgenden wird ein beispielhafter Montageablauf der vollständigen Testzelle 10 beschrieben.

Der Anwender entnimmt zunächst den Referenzelektrodeneinsatz 14 aus der Verpackung. Der Anwender platziert danach die Gegenelektrode 19, mit der Aktivschicht zum Separator 20 zeigend, in dem zweiten Hülsenabschnitt 36 des zweiten Hülsenteils 32 in Kontakt zu dem Separator 20 und schiebt den zweiten Stromsammler 13 in den Rohrabschnitt 26 des zweiten Hülsenteils 32 ein, bis der Kragen 29 an dem zweiten Hülsenteil 32 anschlägt. Die Abmessungen sind dabei so gewählt, dass der Kolben 28 des zweiten Stromsammlers 13 die Gegenelektrode 19 in flächigem Kontakt zu dem Separator 20 hält.

Danach wird die Einheit 13, 14, 19 um 180° gedreht. Anschließend träufelt der Anwender eine bestimmte Menge Elektrolyt auf den Separator 20. Der Elektrolyt verteilt sich über das gesamte Membranelement 24 einschließlich der ringförmigen Membran 23, die somit den Elektrolytkontakt zu dem in den Taschen 38 angeordneten Referenzmaterial mittels "Dochtwirkung" herstellt. Die zugefügte Elektrolytmenge muss mindestens ausreichen, beide Elektroden, den Separator und den ringförmigen Docht komplett zu durchfeuchten.

Bei dem folgenden Arbeitsschritt ist es zweckmäßig, dass die Einheit 13, 14, 19 auf einer Unterlage, vorteilhaft in dem Sockel 43, ruht und sich an der Unterlage abstützt, um ein Beschädigen bzw. Durchdrücken der Membran 23 beim Einlegen der Arbeitselektrode 18 und beim Einschieben des ersten Stromsammlers 12 zu verhindern.

Sodann wird die Einheit 13, 14, 19 vorteilhaft in den Sockel 43 der Zelle 10 eingesetzt und die Arbeitselektrode 18 wird, mit der Aktivschicht zu der anderen Seite des Separators 20 zeigend, in das erste Hülsenteil 31 in Kontakt zu dem elektrolytgetränkten Separator 20 eingelegt. Danach wird der erste Stromsammler 12 in den Rohrabschnitt 25 des ersten Hülsenteils 31 eingeschoben, bis der erste Stromsammler 12 die Arbeitselektrode 18 in flächigem Kontakt zu dem elektrolytgetränkten Separator 20 hält. Dieser Zustand, in dem die Innenzelle 11 anwendungsfertig montiert ist, ist in Figur 7 gezeigt. Das Membranelement 24 stellt den Elektrolytkontakt zwischen sämtlichen drei Elektroden 18, 19, 46 her, siehe Figur 8.

Verschiedene alternative Montageverfahren sind möglich. Beispielsweise kann der Elektrolyt vor dem Einlegen der Elektroden 18, 19 appliziert werden. Es kann auch erst die Arbeitselektrode 18 und dann die Gegenelektrode 19 montiert werden. Die Innenzelle 11 kann auch erst nach vollständiger Montage in den Sockel 43 eingesetzt werden.

Die erfindungsgemäße Innenzelle 11 kann in unterschiedlichen Anwendungen eingesetzt werden. Eine vorteilhafte Anwendung ist in den Figuren 9 und 10 gezeigt. Die als PAT-Cell bezeichnete elektrochemische Testzelle 10 gemäß den Figuren 9 und 10 umfasst einen vorzugsweise metallischen, insbesondere topfförmigen Sockel 43 beispielsweise aus Edelstahl und eine Deckelanordnung 44, die mit dem Sockel 43 über einen Zwischendeckel 64 beispielsweise mittels eines Bajonettverschlusses verbindbar ist und einen Innendeckel 62 umfasst. Die Innenzelle 11 wird in den Sockel 43 eingesetzt und die Deckelanordnung 44 wird auf den Sockel 43 aufgesetzt und mit diesem verbunden. Die Deckelanordnung 44 umfasst ein über eine Handhabe 59 zu betätigendes Schraubelement 45, hier in Form eines Schraubdeckels, durch den der Innendeckel 62 unter Komprimierung eines zwischen Innendeckel 62 und Sockel 43 vorgesehenen Dichtrings 63, beispielsweise aus PE, auf den Sockel 43 gedrückt wird. Sockel 43, Innendeckel 62 und Dichtung 63 bilden somit ein luftdicht abgedichtetes Innengehäuse, durch welches die Innenzelle 11 hermetisch nach außen abgedichtet ist. Die funktionelle Trennung der Deckelanordnung 44 in ein Verbindungsteil 64 zum Verbinden der Deckelanordnung 44 mit dem Sockel 43 und ein Schraubelement 45 erlaubt die manuelle Erzeugung einer für die Abdichtung des Innengehäuses erforderlichen Kraft von einigen 1000 N mittels des Schraubelements. Mit einem einteiligen Twistdeckel, der beide obigen Funktionen wahrnimmt, wäre dies nicht zu erreichen.

Über eine zwischen dem Innendeckel 62 und der Innenzelle 11 angeordneten Feder 60 (siehe Figur 6) wird die Innenzelle 11 und somit die Elektrodenanordnung 17 mit einer definierten Kraft von einigen N beaufschlagt. Über die externen Anschlüsse, nämlich Referenzanschluss 40, Kontaktanschluss 48 für die Arbeitselektrode 18 und Kontaktanschluss 49 für die Gegenelektrode 19 über den Sockel 43 (oder umgekehrt) können Lade- bzw. Entladekurven der elektrochemischen Zelle 10 aufgenommen und Impedanzmessungen durchgeführt werden. Eine nicht erfindungsgemäße Testzellenstation 50 (siehe Figur 12) weist eine Mehrzahl von hier sechzehn Aufnahmen 51 für jeweils eine elektrochemische Testzelle 10 auf. Die Aufnahmen 51 sind vorteilhaft in einer Oberseite des Gehäuses 57 angeordnet und können beispielsweise aus Kunststoff bestehen. Eine Testzellenaufnahme 51 ist im Querschnitt in Figur 6 gezeigt. Die Testzelle 10 ist mit definierter Orientierung in die Aufnahme 51 einsetzbar, was beispielsweise durch ein entsprechendes Profil des Sockels 43 mit einer planen seitlichen Oberfläche 52 oder mittels anderer Orientierungsmittel erreicht werden kann. Im eingesetzten Zustand ist eine Zelle mittels einer nicht gezeigten Verriegelungsmechanik in der entsprechenden Aufnahme 51 fixierbar. Unterhalb der Aufnahme 51 sind doppeltwirkende Federkontaktstifte 54, 53 vorgesehen, die bei in die Aufnahme 51 eingesetzter Zelle 10 einerseits unter Federvorspannung an den externen Kontaktanschlüssen 40, 48, 49, 55 der Zelle 10 anliegen und andererseits unter Federvorspannung an Kontakten einer in der Station 50 vorgesehenen Platine anliegen. Vorzugsweise ist an der Unterseite der Testzelle 10 ein metallisches Kontaktelement 55, beispielsweise ein Kontaktknopf aus Edelstahl, vorgesehen, das bei in die Aufnahme 51 eingesetzter Zelle 10 zwei
doppeltwirkende Federkontaktstifte 53 kurzschließt. Auf diese Weise ist die Anwesenheit einer Testzelle 10 in einer Aufnahme 51 einfach detektierbar. Mittels der doppeltwirkenden Federkontaktstifte 53, 54 sind störende und anfällige Kabelverbindungen vermeidbar. In die Testzellenstation 50 ist vorteilhaft ein Datenlogger 56 zum Aufzeichnen der Messdaten integriert, der in Figur 12 nur schematisch angedeutet ist. Die in den Boden der Testzelle 10 eingesetzten Kontaktanschlüsse 40, 48, 55 müssen nicht unbedingt rund sein, sie können auch andere geometrische Formen annehmen.

Eine andere Anwendung der erfindungsgemäßen Innenzelle 11 ist in Figur 11 gezeigt. Hier ist die Innenzelle 11 in einem für sich genommen bekannten Gehäuse einer elektrochemischen Testzelle 10 angeordnet. Für diese Zelle 10 ist eine Schraubklammer 58 zur Erzeugung der Dichtungskraft vorgesehen.

In einer alternativen Ausführungsform der Testzelle 10 gemäß den Figuren 1 bis 10 sind die ringförmige Membran 23 und der scheibenförmige Separator 20 zwei separate Elemente, wobei die ringförmige Membran 23 herstellerseitig in dem Referenzelektrodeneinsatz 14 vormontiert wird und der Separator 20 erst vom Anwender eingesetzt wird. Der Anwender kann in dieser Ausführungsform einen beliebigen Separator 20 einsetzen. Dies kann beispielsweise vorteilhaft sein, wenn der Anwender einen dickeren Separator 20 beispielsweise aus einem Glasfaservlies verwenden möchte.

## Patentansprüche

1. Referenzelektrodeneinsatz (14) für eine elektrochemische Testzelle (10), insbesondere zum Testen von Lithium-Ionen-Zellen, umfassend eine Referenzelektrode (46) und eine Hülse (15) zur Halterung der Referenzelektrode (46), **dadurch gekennzeichnet, dass** die Hülse (15) und die ringförmige Referenzelektrode (46) eine bauliche Einheit bilden, wobei die Referenzelektrode (46) fest und unverlierbar in der Hülse (15) eingekapselt gehalten ist.

2. Referenzelektrodeneinsatz nach Anspruch 1, **dadurch gekennzeichnet, dass** die Hülse (15) ein erstes Hülsenteil (31), ein zweites Hülsenteil (32) und zwischen den Hülsenteilen (31, 32) wirkende Verbindungsmittel (33) aufweist, mittels derer die Hülsenteile (31, 32) unverlierbar miteinander verbindbar sind.

3. Referenzelektrodeneinsatz nach Anspruch 2, **dadurch gekennzeichnet, dass** die Verbindungsmittel (33) Schnapp- oder Clipsverbindungsmittel sind.

4. Referenzelektrodeneinsatz nach einem der Ansprüche 2 oder 3, **dadurch gekennzeichnet, dass** das erste Hülsenteil (31) ringförmig ist.

5. Referenzelektrodeneinsatz nach einem der Ansprüche 2 bis 4, **dadurch gekennzeichnet, dass** das zweite Hülsenteil (32) einen ersten Hülsenabschnitt (35) mit größerem Innendurchmesser, einen zweiten Hülsenabschnitt (36) mit kleinerem Innendurchmesser und einen die beiden Hülsenabschnitte (35, 36) verbindenden Sockel (37) aufweist.

6. Referenzelektrodeneinsatz nach einem der vorangehenden Ansprüche, **dadurch gekennzeichnet, dass** die Hülse (15) aus einem thermoplastischen batterietauglichen Kunststoff, insbesondere aus Polypropylen oder High Density-Polyethylen, besteht.

7. Referenzelektrodeneinsatz nach einem der vorangehenden Ansprüche, **dadurch gekennzeichnet, dass** die Referenzelektrode (46) einen insbesondere metallischen Trägerring (21) umfasst, in dem mindestens eine Ausnehmung (38) zur Aufnahme eines Referenzmaterials (47) vorgesehen ist.

8. Referenzelektrodeneinsatz nach Anspruch 7, **dadurch gekennzeichnet, dass** der Trägerring (21) eine Mehrzahl von über seinen Umfang verteilte Ausnehmungen (38) zur Aufnahme des Referenzmaterials (47) aufweist.

9. Referenzelektrodeneinsatz nach Anspruch 7 oder 8, **dadurch gekennzeichnet, dass** der Referenzelektrodeneinsatz (14) einen Kontaktring (22) umfasst, der in elektrischem Kontakt mit dem Trägerring (21) steht.

10. Referenzelektrodeneinsatz nach einem der Ansprüche 7 bis 9 **dadurch gekennzeichnet, dass** ein Membranelement (24) mit Hilfe des Trägerrings (21) auf die Hülse (15) aufgespannt ist.

11. Referenzelektrodeneinsatz nach einem der vorangehenden Ansprüche, **dadurch gekennzeichnet, dass** die Hülse (15) an einem Ende einen ersten Rohrabschnitt (25) zum Einschieben eines ersten Stromsammlers (12) und an dem anderen Ende einen zweiten Rohrabschnitt (26) zum Einschieben eines zweiten Stromsammlers (13) aufweist.

12. Elektrochemische Testzelle (10), umfassend einen ersten Stromsammler (12), einen zweiten Stromsammler (13) und eine zwischen dem ersten und dem zweiten Stromsammler angeordnete Elektrodenanordnung (17) mit einer Arbeitselektrode (18), einer Gegenelektrode (19) und einem Referenzelektrodeneinsatz (14) nach einem der vorangehenden Ansprüche.

13. Elektrochemische Testzelle nach Anspruch 12, **dadurch gekennzeichnet, dass** die Testzelle (10) an einer Kontaktseite mit einer Testzellenstation (50) ein leitendes Kontaktelement (55) zur Anwesenheitsdetektion aufweist.

## Claims

1. Reference electrode insert (14) for an electrochemical test cell (10), in particular for testing lithium ion cells, comprising a reference electrode (46) and a sleeve (15) for holding the reference electrode (46), **characterised in that** the sleeve (15) and the annular reference electrode (46) form a structural unit, the reference electrode (46) being secured firmly and captively in the sleeve (15) in an encapsulated manner.

2. Reference electrode insert according to claim 1, **characterised in that** the sleeve (15) comprises a first sleeve part (31), a second sleeve part (32), and connection means (33) which act between the sleeve parts (31, 32) and by means of which the sleeve parts (31, 32) can be captively interconnected.

3. Reference electrode insert according to claim 2, **characterised in that** the connection means (33) are snap-in or clip connection means.

4. Reference electrode insert according to either claim 2 or claim 3, **characterised in that** the first sleeve part (31) is annular.

5. Reference electrode insert according to any of claims 2 to 4, **characterised in that** the second sleeve part (32) comprises a first sleeve portion (35) having a larger internal diameter, a second sleeve portion (36) having a smaller internal diameter, and a socket (37) connecting the two sleeve portions (35, 36).

6. Reference electrode insert according to any of the preceding claims, **characterised in that** the sleeve (15) consists of a thermoplastic, battery-grade plastics material, in particular polypropylene or high-density polyethylene.

7. Reference electrode insert according to any of the preceding claims, **characterised in that** the reference electrode (46) comprises an in particular metal support ring (21), in which at least one recess (38) for receiving a reference material (47) is provided.

8. Reference electrode insert according to claim 7, **characterised in that** the support ring (21) comprises a plurality of recesses (38) distributed over the circumference thereof for receiving the reference material (47).

9. Reference electrode insert according to either claim 7 or claim 8, **characterised in that** the reference electrode insert (14) comprises a contact ring (22) which is in electrical contact with the support ring (21).

10. Reference electrode insert according to any of claims 7 to 9, **characterised in that** a membrane element (24) is clamped onto the sleeve (15) by means of the support ring (21).

11. Reference electrode insert according to any of the preceding claims, **characterised in that** the sleeve (15) comprises a first tube portion (25) for inserting a first accumulator (12) at one end and a second tube portion (26) for inserting a second accumulator (13) at the other end.

12. Electrochemical test cell (10), comprising a first accumulator (12), a second accumulator (13) and an electrode arrangement (17), arranged between the first and the second accumulator, comprising a working electrode (18), a counter electrode (19) and a reference electrode insert (14) according to any of the preceding claims.

13. Electrochemical test cell according to claim 12, **characterised in that** the test cell (10) on a contact face contacting a test cell station (50) comprises a conductive contact element (55) for presence detection.

## Revendications

1. Insert à électrode de référence (14) d'un élément électrochimique d'essai (10), en particulier destiné à tester des éléments lithium-ion, comprenant une électrode de référence (46) et une douille (15) destinée à maintenir l'électrode de référence (46), **caractérisé en ce que** la douille (15) et l'électrode de référence (46) annulaire forment une unité structurelle, l'électrode de référence (46) étant maintenue encapsulée à demeure et imperdable dans la douille (15).

2. Insert à électrode de référence selon la revendication 1, **caractérisé en ce que** la douille (15) comporte une première partie de douille (31), une seconde partie de douille (32) et des moyens de liaison (33) agissant entre les parties de douille (31, 32), au moyen desquels les parties de douille (31, 32) peuvent être reliées l'une à l'autre de manière imperdable.

3. Insert à électrode de référence selon la revendication 2, **caractérisé en ce que** les moyens de liaison (33) sont des moyens de liaison à encliquetage ou clipsés.

4. Insert à électrode de référence selon l'une des revendications 2 ou 3, **caractérisé en ce que** la première partie de douille (31) est annulaire.

5. Insert à électrode de référence selon l'une des revendications 2 à 4, **caractérisé en ce que** la seconde partie de douille (32) comporte une première portion de douille (35) ayant un diamètre intérieur plus grand, une seconde portion de douille (36) ayant un diamètre intérieur plus petit et un socle (37) reliant les deux portions de douille (35, 36).

6. Insert à électrode de référence selon l'une des revendications précédentes, **caractérisé en ce que** la douille (15) est constituée d'une matière synthétique thermoplastique convenant aux batteries, en particulier de polypropylène ou de polyéthylène haute densité.

7. Insert à électrode de référence selon l'une des revendications précédentes, **caractérisé en ce que** l'électrode de référence (46) comprend une bague de support (21) en particulier métallique, dans laquelle au moins un évidement (38) est prévu pour recevoir un matériau de référence (47).

8. Insert à électrode de référence selon la revendication 7, **caractérisé en ce que** la bague de support (21) comporte une pluralité d'évidements (38) répartis sur sa circonférence pour recevoir le matériau de référence (47).

9. Insert à électrode de référence selon la revendication 7 ou 8, **caractérisé en ce que** l'insert à électrode de référence (14) comprend une bague de contact (22), qui est en contact électrique avec la bague de support (21).

10. Insert à électrode de référence selon l'une des revendications 7 à 9, **caractérisé en ce qu'**un élément de membrane (24) est tendu sur la douille (15) à l'aide de la bague de support (21).

11. Insert à électrode de référence selon l'une des revendications précédentes, **caractérisé en ce que** la douille (15) comporte à une extrémité une première portion tubulaire (25) destinée à insérer un premier accumulateur (12) et à l'autre extrémité une seconde portion tubulaire (26) destinée à insérer un second accumulateur (13).

12. Élément électrochimique d'essai (10), comprenant un premier accumulateur (12), un second accumulateur (13) et un agencement d'électrodes (17) disposé entre le premier et le second accumulateur et doté d'une électrode de travail (18), d'une contre-électrode (19) et d'un insert à électrode de référence (14) selon l'une des revendications précédentes.

13. Élément électrochimique d'essai selon la revendication 12, **caractérisé en ce que** l'élément d'essai (10) comporte, sur un côté de contact avec un poste d'éléments d'essai (50), un élément de contact (55) conducteur pour la détection de sa présence.
